(19) Europäisches Patentamt
European Patent Office
Office européen des brevets

(11) Publication number: **0 429 176 A2**

(12) # EUROPEAN PATENT APPLICATION

(21) Application number: **90311532.7**

(51) Int. Cl.5: **G07F 7/08**, H04M 17/02

(22) Date of filing: **19.10.90**

(30) Priority: **20.11.89 JP 299590/89**

(43) Date of publication of application: **29.05.91 Bulletin 91/22**

(84) Designated Contracting States: **CH GB IT LI**

(71) Applicant: **TAMURA ELECTRIC WORKS, LTD.**
**2-3, Shimomeguro 2-chome**
**Meguro-ku Tokyo(JP)**

(72) Inventor: **Suzuki, Nobuo, c/o Tamura Denki**
**Hashimoto Syataku**
**17-21-203, Higashihashimoto 2-chome**
**Sagamihara-shi, Kanagawa(JP)**
Inventor: **Ohara, Mikihiko, Central Kotesashi**
**15-9-205, Kotesashicyou 4-chome**
**Tokorozawa-shi Saitama(JP)**

(74) Representative: **Wood, Anthony Charles et al**
**Urquhart-Dykes & Lord 91 Wimpole Street**
**London W1M 8AH(GB)**

(54) **Prepaid card management system.**

(57) A prepaid card management system includes a memory and a determining unit. The memory causes a card to store a fixed card number together with value information and stores the value information and the card number in correspondence with the value information when a service is finished. The determining unit stops a service when value information read out from the card upon starting of a service is larger than the value information read out from the memory in correspondence with the card number.

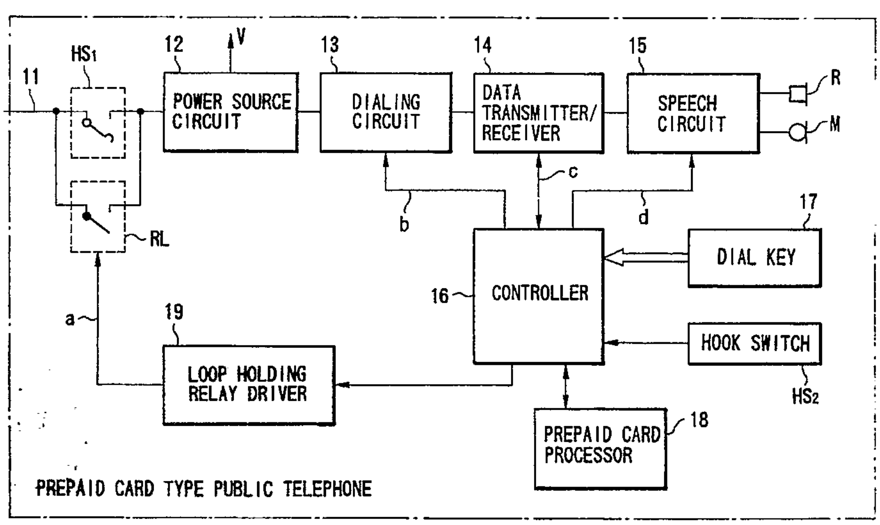


FIG.1

EP 0 429 176 A2

# PREPAID CARD MANAGEMENT SYSTEM

The present invention relates to a prepaid card management system for preventing illegal rewriting of a prepaid card.

A large number of prepaid cards and service apparatuses using the prepaid cards, e.g., card type public telephones are now available. In recent years, however, illegal rewriting of an effective message rate (value information) of a prepaid card frequently occurs. For example, an effective message rate of a card having a maximum message rate of 500 is rewritten to a message rate of 10,000. In order to prevent this illegal rewriting, if an effective message rate is rewritten to a message rate more than 500 as described above, a conventional prepaid card management system detects this illegal rewriting and disables a service.

The above conventional prepaid card management system detects only a prepaid card which is illegally rewritten to have a message rate more than its maximum effective message rate as an illegally rewritten card and disables a service. Therefore, if a card which is already used up or being used is rewritten to have a message rate falling within its maximum effective message rate, the above conventional system does not detect this card as an illegally rewritten card and permits a service.

It is, therefore, the first object of the present invention to provide a prepaid card management system which can reliably detect an illegally rewritten card to perfectly prevent illegal rewriting.

It is the second object of the present invention to provide a prepaid card management system which can perform total management of value information of cards.

It is the third object of the present' invention to provide a prepaid card management system in which a service terminal apparatus need not transmit value information of a card when a service is to be started.

It is the fourth object of the present invention to provide a prepaid card management system in which no center apparatus is required.

It is the fifth object of the present invention to provide a prepaid card management apparatus which can perform total management of cards.

It is the sixth object of the present invention to provide a prepaid card management system in which no registration need be performed when a card is to be issued.

It is the seventh object of the present invention to provide a prepaid card management system which can perform card management in a small memory capacity.

It is the eighth object of the present invention to provide a prepaid card management system which can immediately detect illegal rewriting and stop a service when an invalid card is used.

In order to achieve the above objects, according to the first aspect of the present invention, there is provided a prepaid card management system in which predetermined value information is stored in a card, a value corresponding to a service received by using the card is subtracted, and remaining value information is stored, comprising a memory for causing the card to store a fixed card number together with the value information and storing the value information and the card number in correspondence therewith when a service is finished, and a determining means for stopping a service when value information read out from the card upon starting of a service is larger than the value information read out from the memory in correspondence with the card number.

According to the prepaid card management system of the present invention, a service is stopped when value information read out from a card upon starting of the service is larger than value information, read out from a memory, corresponding to the number of the card.

A card number and value information are transmitted to a center apparatus upon starting of a service, and the card number and remaining value information of the card are transmitted to the center apparatus upon ending of the service.

A card number and value information stored in a memory are periodically transmitted to a service terminal apparatus.

A service terminal apparatus checks value information stored in both a card and a memory.

Card numbers are sequentially registered in a memory when cards are issued.

Card numbers read out from cards when the cards are used for the first time are sequentially registered in a memory.

When a memory is full, registered card number information is erased from the memory in a predetermined order.

An invalid card is registered in at least one of the card and a memory.

Figs. 1 and 2 are block diagrams showing an embodiment of a prepaid card management system according to the present invention; and

Figs. 3 to 7 are flow charts for explaining operations of the embodiment shown in Figs. 1 and 2.

The present invention will be described in detail below with reference to the accompanying drawings.

Figs. 1 and 2 are block diagrams showing an embodiment of a prepaid card management system according to the present invention. Fig. 1 will be described first. Fig. 1 is a block diagram showing a prepaid card type public telephone as a service terminal apparatus. Referring to Fig. 1, reference numeral 10 denotes a prepaid card type public telephone (to be referred to as a public telephone hereinafter); 11 a channel; 12, a power source circuit; 13, a dialing circuit; 14, a data transmitter/receiver; 15, a speech circuit; 16, a controller; 17, a dial key; 18, a prepaid card processor; and 19, a loop holding relay driver. Reference symbols $HS_1$ and $HS_2$ denote hook switches; RL, a loop holding relay; R, a receiver; M, a microphone; a, a loop holding relay operation release signal; b, a dial signal; c, data; and d, a mute signal.

When a user performs an off-hook operation and inserts a prepaid card (to be referred to as a card hereinafter) into a card insertion port, the controller 16 checks via the prepaid card processor 18 whether the inserted card is valid, or remaining amount data or the like read out from the inserted card is transmitted to a center apparatus (to be described later) via the data transmitter/receiver 14 to check whether the card is valid. If the card is valid, the user can successively operate the dial key 17 to perform dialing, thereby receiving a speech service.

Fig. 2 will be described below. Fig. 2 is a block diagram showing the center apparatus. Referring to Fig. 2, reference numeral 20 denotes the center apparatus; 21, a channel; 22, a channel controller; 23, a display; 24, a main unit for controller the center apparatus; 25, a memory; 26, an input unit constituted by a keyboard and the like; and 27, a printer.

When remaining amount data or the like of a card is transmitted from the public telephone 10 via the channel 21, the main unit 24 collates this remaining amount data with remaining amount data of the card stored in advance in the memory 25 via the channel controller 22. If the card is valid, the main unit 24 permits the public telephone to perform a speech service. If necessary, the main unit 24 can cause the display 23 or the printer 27 to display or print out card numbers of cards stored in the memory 25 and remaining amount data or the like stored in correspondence with the card numbers.

Operations of the prepaid card management system having the above arrangement will be described below with reference to flow charts shown in Figs. 3 to

7.

Figs. 3 and 4 are flow charts for explaining the first embodiment of the prepaid card management system. These flow charts explain a method of managing a card in the center apparatus 20. Fig. 3 will be described first.

Fig. 3 is a flow chart for explaining an operation of the public telephone 10. When an off-hook operation is detected, a card is inserted and the inserted card is taken in in step 100. Data stored in the inserted card is read out in step 101, and whether an effective remaining amount is present is checked in in step 102. If "N (NO)" in step 102, the card is returned in step 103, and whether an on-hook operation is performed is checked in step 104. If "Y (YES)" in step 104, i.e., if an on-hook operation is detected, the processing is ended.

If "Y" in step 102, i.e., if effective remaining amount data is present, the center apparatus 20 is called and a card number of the card and data indicating a remaining amount obtained when a speech is started, i.e., remaining amount start data are transmitted thereto in step 105. In step 106, whether a card use permission signal from the center apparatus is received is checked. If "N" in step 106, i.e., if a use inhibition signal of the card is received, the card is returned as an illegal card in step 103.

If "Y" in step 106, i.e., if the card use permission signal is received, dial input permission processing is performed in step 110. Subsequently, dial data is input from the dial key 17 to perform dial transmission onto the channel 11 in step 111, and whether an answer signal is detected is checked in step 112.

If "Y" in step 112, i.e., if the answer signal is detected, remaining amount subtraction processing is performed in step 113. and whether an on-hook operation is performed is checked in step 114. If "N" in step 114, whether a charging signal is received is checked in step 115. If "Y" in step 115, i.e., if the charging signal is received, the remaining amount subtraction processing is performed in step 113. If "N" in step 115, an on-hook operation is checked in step 114. If "Y" in step 114, i.e., if the on-hook operation is performed, the remaining data is written in the card in step 117, and the center apparatus 20 is called and the card number of the card and the remaining amount data obtained when the speech is ended, i.e., remaining amount end data are transmitted thereto in step 118.

If "N" in step 112, i.e., if the answer signal is not detected, whether an on-hook operation is performed is checked in step 116. If "N" in step 116, the flow returns to step 112. If "Y" in step 116, i.e., if the on-hook operation is performed, the processing from step 117 is executed.

Fig. 4 is a flow chart for explaining an operation of the center apparatus 20. When a newly issued card is to be registered in a set mode to be described later, a card number and an issued amount, i.e., remaining amount data of the card are stored in the memory 25.

In step 200, an incoming call from the public telephone 10 is checked. If "Y" in step 200, a DC loop is closed to respond to this incoming call in step 201. Subsequently, in step 202, a card number, remaining amount start data, and remaining amount end data are received.

In step 203, the received card number is retrieved from the memory 25. In step 204, whether the card is an invalid card or a non-registered card which is not present in the memory 25 is checked. If "N" in step 203, whether an end flag is set in a memory area corresponding to the card number is checked in step 205. As will be described later, this end flag is set when remaining amount end data is received and is normally set when remaining amount start data is received. If "Y" in step 205, i.e., if the end flag is set, whether the received data is remaining amount start data is checked in step 206. If "Y" in step 206, the received remaining start data is collated with the stored contents of the memory area to check a coincidence therebetween in step 207.

If "Y" in step 207, i.e., if the remaining amount start data coincides with the contents of the memory area, a start flag is set in a memory area corresponding to the card number in step 208. Subsequently, a card use permission signal is transmitted to the public telephone 10 in step 209, the DC loop is opened in step 210, and the flow returns to step 200.

If "N" in step 207, i.e., if the remaining amount start data does not coincide with the stored contents, the card is determined to be an invalid card, and the card number of the card and an invalidation reason indicating that the remaining amount start data does not coincide with the stored contents are stored in a predetermined memory area in step 214. Subsequently, a card use inhibition signal is transmitted to the public telephone 10 in step 215, and the DC loop is opened in step 210.

If "N" in step 205, i.e., if no end flag is set, the card is determined to be an invalid card, the card number of the card and an invalidation reason indicating that no end flag is set are stored in a predetermined memory area in step 214, and the processing from step 215 is executed. If "Y" in step 204, i.e., if the card is an invalid card or a non-registered card, the processing from step 215 is executed.

If "N" in step 206, i.e., if the remaining amount end data is received, the remaining amount end data and the end flag are set in a memory area corresponding to the card number in step 211, and whether remaining amount = 0? is checked in step 212. If "N" in step 212, the DC loop is opened in step 210. If "Y" in step 212, i.e., if the remaining amount is 0, the card is determined to be an invalid card, the card number of the card and an invalidation reason indicating that the remaining amount is 0 are stored in a predetermined memory area in step 213, and the processing from step 210 is executed.

An operation of the card set mode will be described below. If "N" in step 200, i.e., if no incoming call is transmitted from the public telephone 10, whether a set mode is to be performed is checked in step 220. If "N" in step 220, the flow returns to step 200. If "Y" in step 220, processing is performed for the following three set modes. That is, in step 221, whether a registration mode for a newly issued card is to be performed is checked. If "Y" in step 221, a card number is stored in a predetermined memory area in step 222. In addition, in step 222, an issued amount of the card as remaining amount data and an end flag are stored in a memory area corresponding to the card number, and the flow returns to step 200.

If "N" in step 221, whether a delete mode for a registered card is to be performed is checked in step 223. If "Y" in step 223, a memory area corresponding to a card number of the card to be deleted is subjected to deletion in step 224, and the flow returns to step 200.

In "N" in step 223, a display mode for invalid cards is determined. Therefore, in step 225, a list of card numbers of invalid cards and invalidation reasons is displayed on the display 23 or printed out by the printer 27, and the flow returns to step 200.

Fig. 5 is a flow chart for explaining an operation of the second embodiment of the prepaid card management system. This flow chart explains an operation of the public telephone 10 for performing registration and determination of an invalid card.

Referring to Fig. 5, when an off-hook operation is detected, a card is inserted and the inserted card is taken in in step 300. Data stored in the inserted card is read out in step 301, and whether the inserted card is an invalid card is checked in step 302. If "N" in step 302, the card is returned in step 309, and whether an on-hook operation is performed is checked in step 310. If "Y" in step 310, i.e., if an on-hook operation is detected, the processing is ended.

If "N" in step 302, i.e., if the inserted card is not an invalid card, whether an effective remaining amount is present is checked in step 303. If "N" in step 303, the processing from step 309 is executed. If "Y" in step 303, i.e., if an effective remaining amount is present, the center apparatus 20 is called, and a card number and remaining amount start data of the card are transmitted thereto. Thereafter, in step 306, whether a card use permission signal is received is checked.

If "Y" in step 306, dialing is performed to perform speech processing in step 307. If "N" in step 306, i.e., if a card use inhibition signal is received, registration of an invalid card is performed in step 308, and the processing from step 309 is executed. Note that registration of an invalid card may be stored in a card or in a memory (not shown) of the public telephone

Fig. 6 is a flow chart for explaining an operation of the third embodiment of the prepaid card management system. This flow chart explains an operation of the public telephone 10.

Referring to Fig. 6, whether an incoming call is received is checked in step 400. If "Y" in step 400, i.e., if an incoming call is received, a DC loop is closed to respond to this incoming call in step 401, communication protocol processing is performed in step 402, and whether a communication destination is the center apparatus 20 is checked in step 403.

If "Y" in step 403, i.e., if the destination is the center apparatus 20, transfer data from the center apparatus 20, i.e., a card number, remaining amount data corresponding to the card number, and card information such as an invalid card number are received and stored in the memory of the public telephone 10, and whether communication is finished is checked in step 405. If "N" in step 405, the flow returns to step 404. If "Y" in step 405, i.e., if the communication is finished, the DC loop is opened to end the processing in step 406. If "N" in step 403, i.e., if the communication destination is not the center apparatus 20, the DC loop is opened to end the processing in step 406.

As described above, the public telephone 10 receives card information stored in the center apparatus 20 and periodically transmitted therefrom and stores the received information in the memory. Therefore, the public telephone 10 can check on the basis of the stored card information whether a card to be used is valid.

Fig. 7 is a flow chart for explaining an operation of the fourth embodiment of the prepaid card management system. This flow chart explains an operation of the public telephone 10 which has a memory for storing card information and can check on the basis of the stored contents of the memory whether a card to be used is valid.

In this flow chart, processing from steps 500 to 503 is the same as that from steps 300 to 303 in Fig. 6 and a detailed description thereof will be omitted.

Referring to Fig. 7, if "Y" in step 502, i.e., if an inserted card is an invalid card, the card is returned in step 506, and whether an on-hook operation is performed is checked in step 507. If "N" in step 507, the flow waits until an on-hook operation is performed. If "Y" in step 507, i.e., if the on-hook operation is performed, the invalid card is registered in the memory in step 508, and the card number of the invalid card is transmitted to the center apparatus 20 in step 509. If "N" in step 503, i.e., if no effective remaining amount is present, the processing from step 506 is performed.

If "Y" in step 503, i.e., if an effective remaining amount is present, remaining amount data is read out from a memory corresponding to the card number in step 504, and whether the remaining amount data read out from the memory is larger than that read out from the card is checked in step 505. If "N" in step 505, i.e., if the remaining amount data read out from the memory is smaller than that read out from the card, processing from step 506 is executed. If the remaining amount data read out from the memory is equal to or larger than that read out from the card, processing from step 510 is executed.

Note that the processing from steps 510 to 516 is the same as that from steps 110 to 116 in Fig. 3 and a detailed description thereof will be omitted.

If "Y" in step 514 or 521, i.e., if an on-hook operation is detected, the remaining amount data is written in the card in step 516, and whether a card number is new is checked in step 517. If "Y" in step 517, i.e., if the card is new, whether a memory is full is checked in step 518 in order to register this new card.

If "Y" in step 518, i.e., if the switch memory is full, remaining amount data corresponding to an oldest card number is erased in step 519, and the remaining amount data and the new card number are stored and registered in a memory area corresponding to this card number in step 520.

If "N" in step 517, i.e., if the card number is not new, the remaining amount data is stored in the memory area corresponding to this card number in step 520. If "N" in step 518, i.e., if the memory is not full, the new card number and the remaining amount data are stored in an empty area of the memory in step 520.

As has been described above, according to the first aspect of the prepaid card management system of the present invention, a service is stopped when value information read out from a card upon starting of the service is larger than value information read out from a memory corresponding to the number of the card. Therefore, an illegally rewritten card can be reliably detected to perfectly prevent illegal rewriting.

According to the second aspect of the present invention, a card number and value information are transmitted to a center apparatus when a service is started, and the card number and remaining value information of the card are transmitted to the center apparatus when the service is finished, thereby checking illegal rewriting on the basis of value information stored in a memory of the center apparatus. Therefore, total management of value information of cards can be performed.

According to the third aspect of the present invention, card numbers and value information stored in a memory are periodically transmitted to a service terminal apparatus. Therefore, the service terminal apparatus need not transmit value information of a card upon starting of a service.

According to the fourth aspect of the present invention, a service terminal apparatus checks value information stored in both a card and a memory. Therefore, no center apparatus need be used.

According to the fifth aspect of the present invention, card numbers are sequentially stored in a memory when cards are issued. Therefore, total management of the cards can be performed.

According to the sixth aspect of the present invention, card numbers read out from cards when the cards are used for the first time are sequentially registered in a memory. Therefore, no registration need be performed when the cards are issued.

According to the seventh aspect of the present invention, when a memory is full, registered card number information is erased from the memory in a predetermined order. Therefore, cards can be managed by a small memory capacity.

According to the eighth aspect of the present invention, registration of an invalid card is performed in at least one of a card or a memory. Therefore, illegal rewriting can be immediately detected to stop a service when use of the invalid card is started.

## Claims

1. A prepaid card management system in which predetermined value information is stored in a card, a value corresponding to a service received by using said card is subtracted, and remaining value information is stored, comprising:
a memory for causing said card to store a fixed card number together with the value information and storing the value information and the card number in correspondence therewith when a service is finished; and
determining means for stopping a service when value information read out from said card upon starting of a service is larger than the value information read out from said memory in correspondence with the card number.

2. A system according to claim 1, wherein
said memory and said determining means are provided in a center apparatus, and
transmitting means for transmitting a card number and value information read out from a card to said center apparatus when a service is started and transmitting a card number and remaining value information of said card to said center apparatus when the service is finished is provided in a service terminal apparatus.

3. A system according to claim 1, wherein
said memory and second transmitting means are provided in said center apparatus, and
said determining means and first transmitting means for transmitting a card number and remaining value information of a card to said center apparatus when a service is finished are provided in said service terminal apparatus, said center apparatus causing said second transmitting means to periodically transmit contents of said memory.

4. A system according to claim 1, wherein said memory and said determining means are provided in said service terminal apparatus.

5. A system according to claim 1, wherein means for sequentially registering card numbers when cards are issued is provided in said memory.

6. A system according to claim 1, wherein means for sequentially registering card numbers read out from cards when said cards are used for the first time is provided in said memory.,

7. A system according to claim 5, further comprising:
means for erasing registered card number information in a predetermined order when said memory is full.

8. A system according to claim 6, further comprising:
means for erasing registered card number information in a predetermined order when said memory is full.

9. A system according to claim 5, further comprising:
means for performing registration of an invalid card in at least one of a card and a memory on the basis of an output from said determining means.

10. A system according to claim 6, further comprising:
means for performing registration of an invalid card in at least one of a card and a memory on the basis of an output said determining means.

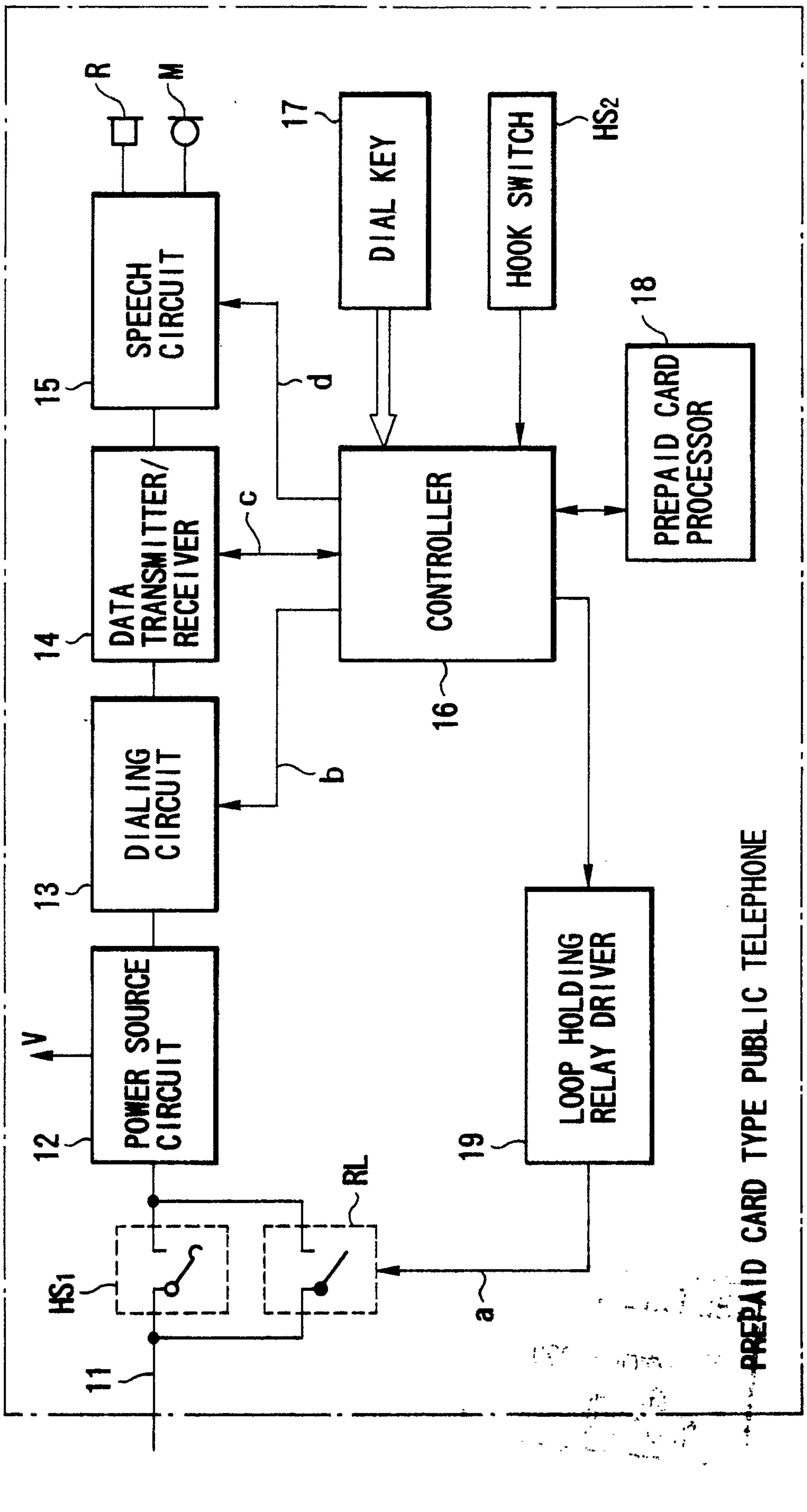
POWER SOURCE CIRCUIT
DIALING CIRCUIT
DATA TRANSMITTER/ RECEIVER
SPEECH CIRCUIT
DIAL KEY
HOOK SWITCH
CONTROLLER
PREPAID CARD PROCESSOR
LOOP HOLDING RELAY DRIVER
PREPAID CARD TYPE PUBLIC TELEPHONE
11
12
13
14
15
16
17
18
19
HS1
HS2
RL
R
M
V
a
b
c
d

FIG. 1

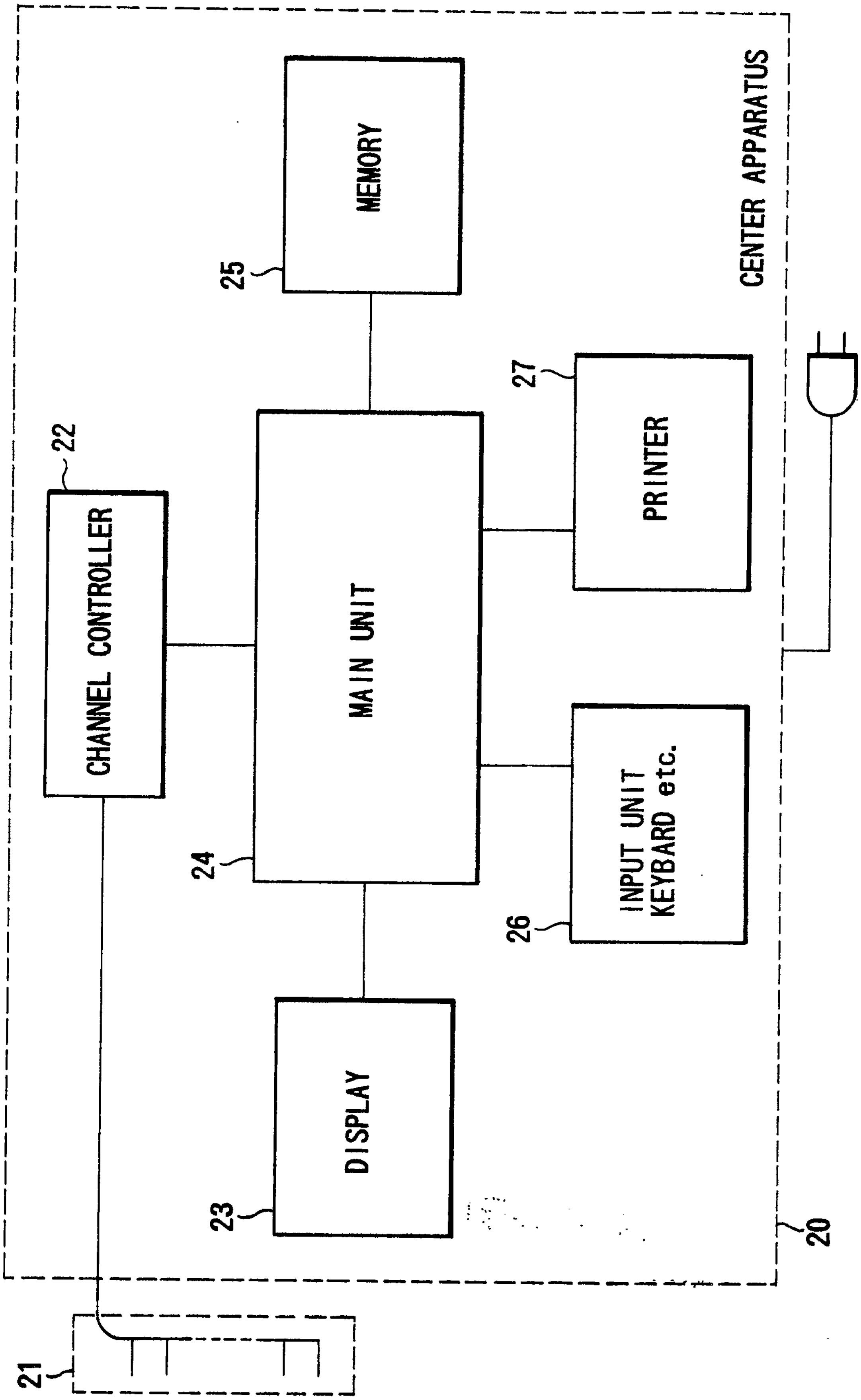
CENTER APPARATUS
20
21
22
CHANNEL CONTROLLER
23
DISPLAY
24
MAIN UNIT
25
MEMORY
26
INPUT UNIT
KEYBARD etc.
27
PRINTER

FIG.2

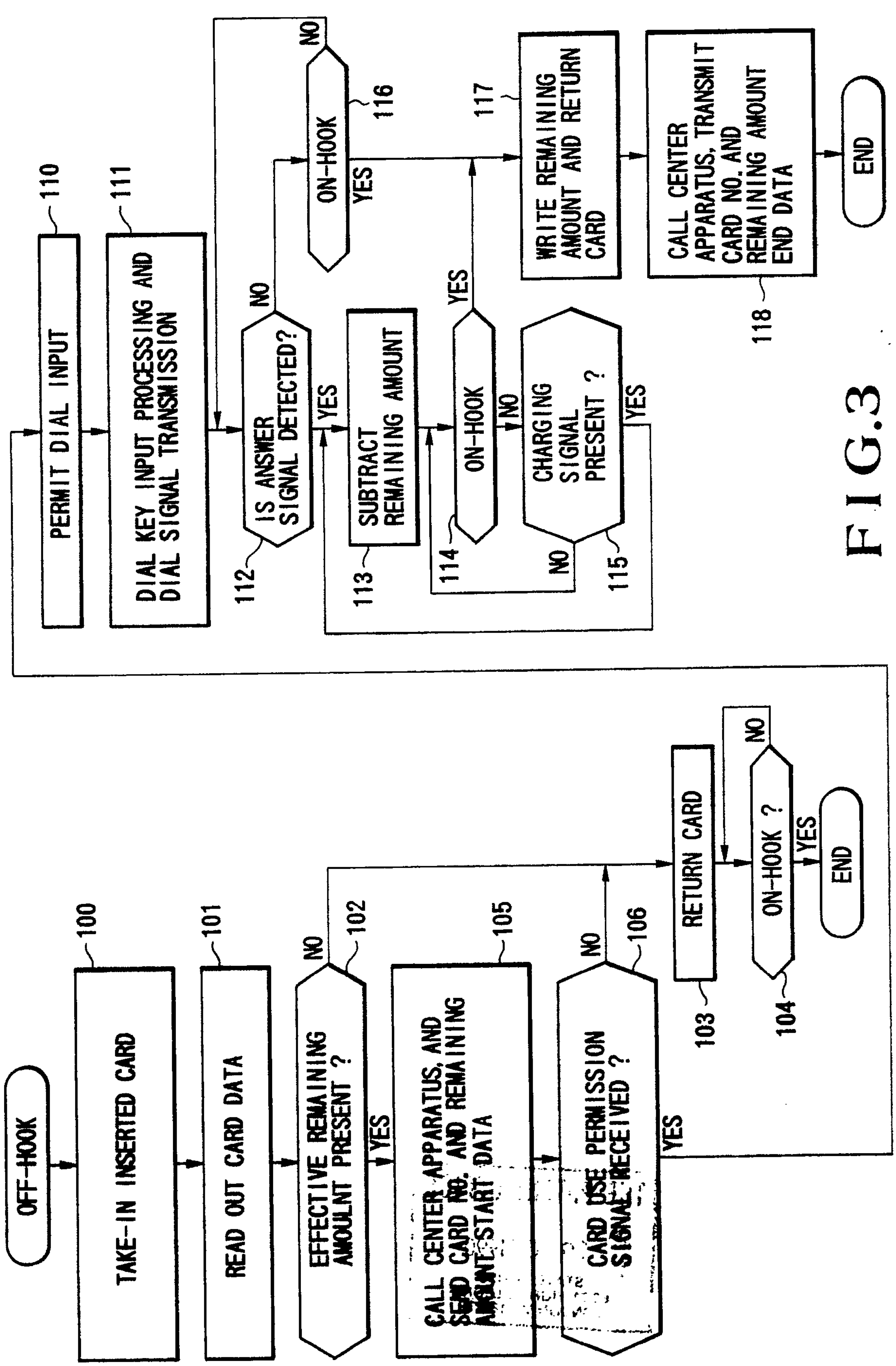
OFF-HOOK
TAKE-IN INSERTED CARD
100
READ OUT CARD DATA
101
EFFECTIVE REMAINING AMOULNT PRESENT ?
102
YES
NO
CALL CENTER APPARATUS, AND SEND CARD NO. AND REMAINING AMOUNT START DATA
105
CARD USE PERMISSION SIGNAL RECEIVED ?
106
YES
NO
RETURN CARD
103
ON-HOOK ?
104
YES
NO
END
PERMIT DIAL INPUT
110
DIAL KEY INPUT PROCESSING AND DIAL SIGNAL TRANSMISSION
111
IS ANSWER SIGNAL DETECTED?
112
YES
NO
SUBTRACT REMAINING AMOUNT
113
ON-HOOK
114
YES
NO
CHARGING SIGNAL PRESENT ?
115
YES
NO
ON-HOOK
116
YES
NO
WRITE REMAINING AMOUNT AND RETURN CARD
117
CALL CENTER APPARATUS, TRANSMIT CARD NO. AND REMAINING AMOUNT END DATA
118
END

FIG.3

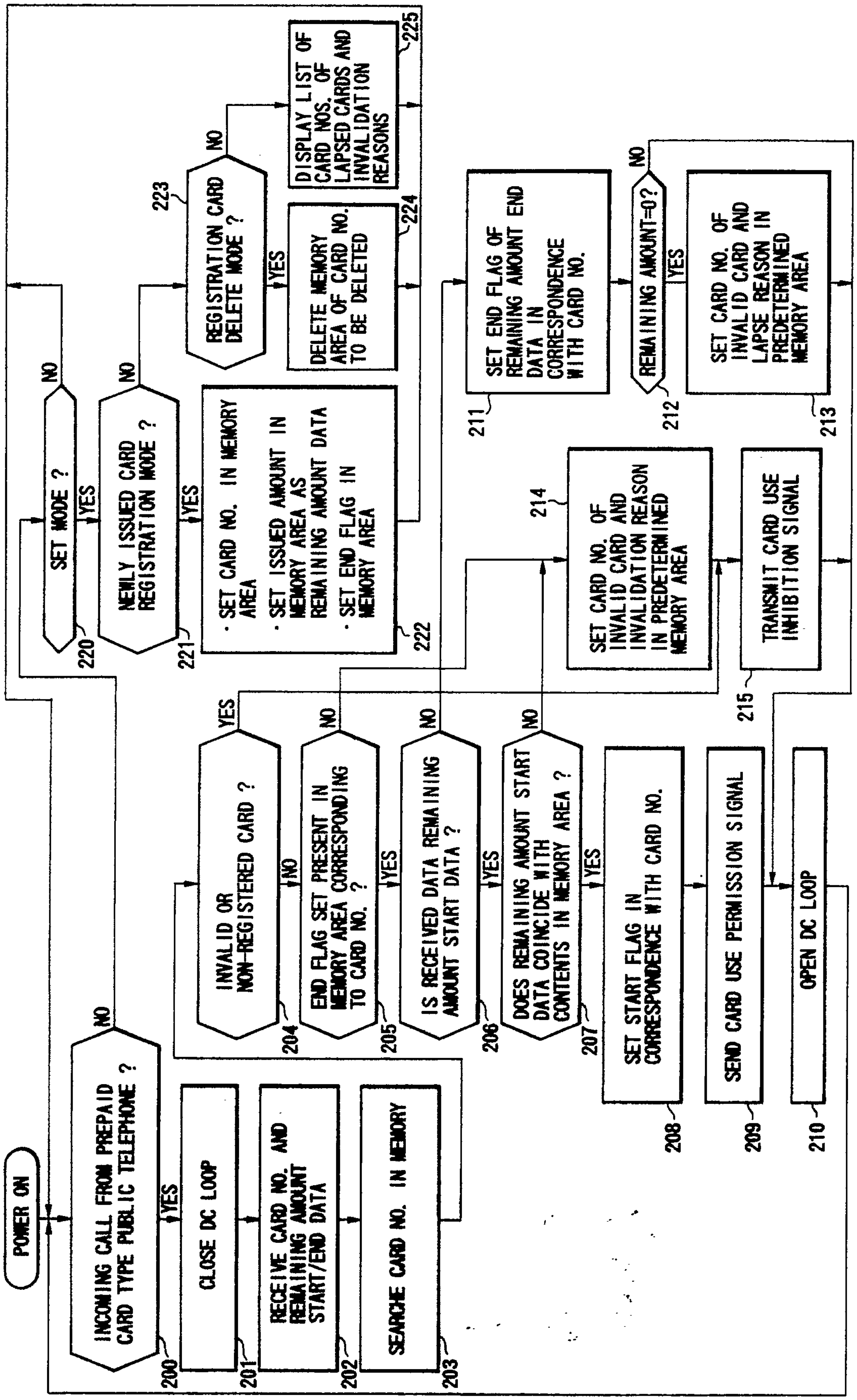
POWER ON
INCOMING CALL FROM PREPAID CARD TYPE PUBLIC TELEPHONE ?
200
CLOSE DC LOOP
201
RECEIVE CARD NO. AND REMAINING AMOUNT START/END DATA
202
SEARCHE CARD NO. IN MEMORY
203
INVALID OR NON-REGISTERED CARD ?
204
END FLAG SET PRESENT IN MEMORY AREA CORRESPONDING TO CARD NO. ?
205
IS RECEIVED DATA REMAINING AMOUNT START DATA ?
206
DOES REMAINING AMOUNT START DATA COINCIDE WITH CONTENTS IN MEMORY AREA ?
207
SET START FLAG IN CORRESPONDENCE WITH CARD NO.
208
SEND CARD USE PERMISSION SIGNAL
209
OPEN DC LOOP
210
SET END FLAG OF REMAINING AMOUNT END DATA IN CORRESPONDENCE WITH CARD NO.
211
REMAINING AMOUNT=0?
212
SET CARD NO. OF INVALID CARD AND LAPSE REASON IN PREDETERMINED MEMORY AREA
213
SET CARD NO. OF INVALID CARD AND INVALIDATION REASON IN PREDETERMINED MEMORY AREA
214
TRANSMIT CARD USE INHIBITION SIGNAL
215
SET MODE ?
220
NEWLY ISSUED CARD REGISTRATION MODE ?
221
· SET CARD NO. IN MEMORY AREA
· SET ISSUED AMOUNT IN MEMORY AREA AS REMAINING AMOUNT DATA
· SET END FLAG IN MEMORY AREA
222
REGISTRATION CARD DELETE MODE ?
223
DELETE MEMORY AREA OF CARD NO. TO BE DELETED
224
DISPLAY LIST OF CARD NOS. OF LAPSED CARDS AND INVALIDATION REASONS
225

FIG.4

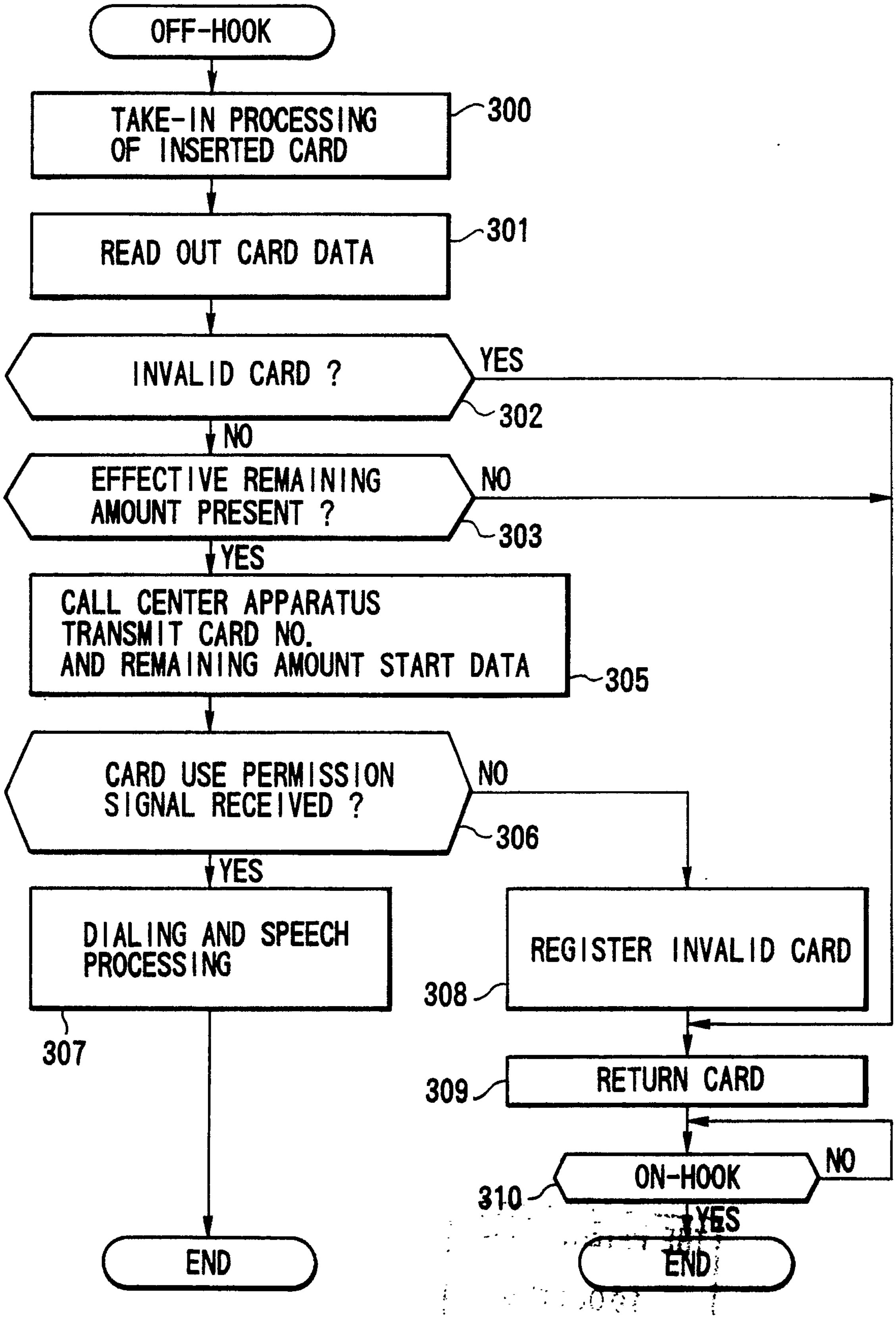
OFF-HOOK
TAKE-IN PROCESSING OF INSERTED CARD
300
READ OUT CARD DATA
301
INVALID CARD ?
YES
302
NO
EFFECTIVE REMAINING AMOUNT PRESENT ?
NO
303
YES
CALL CENTER APPARATUS
TRANSMIT CARD NO.
AND REMAINING AMOUNT START DATA
305
CARD USE PERMISSION SIGNAL RECEIVED ?
NO
306
YES
DIALING AND SPEECH PROCESSING
307
REGISTER INVALID CARD
308
RETURN CARD
309
ON-HOOK
NO
310
YES
END
END

FIG.5

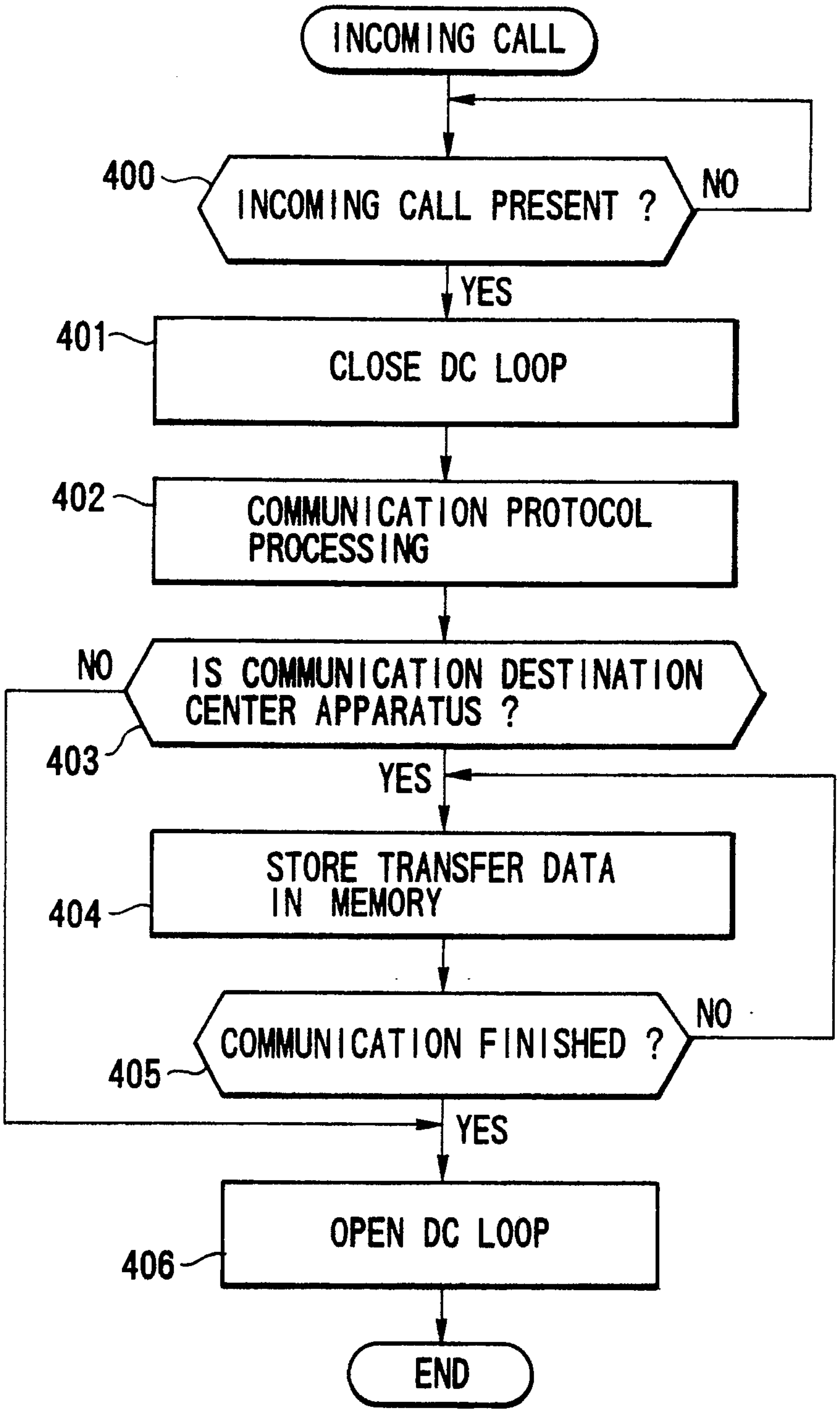
INCOMING CALL
400
INCOMING CALL PRESENT ?
NO
YES
401
CLOSE DC LOOP
402
COMMUNICATION PROTOCOL PROCESSING
NO
IS COMMUNICATION DESTINATION CENTER APPARATUS ?
403
YES
STORE TRANSFER DATA IN MEMORY
404
COMMUNICATION FINISHED ?
NO
405
YES
OPEN DC LOOP
406
END

FIG.6

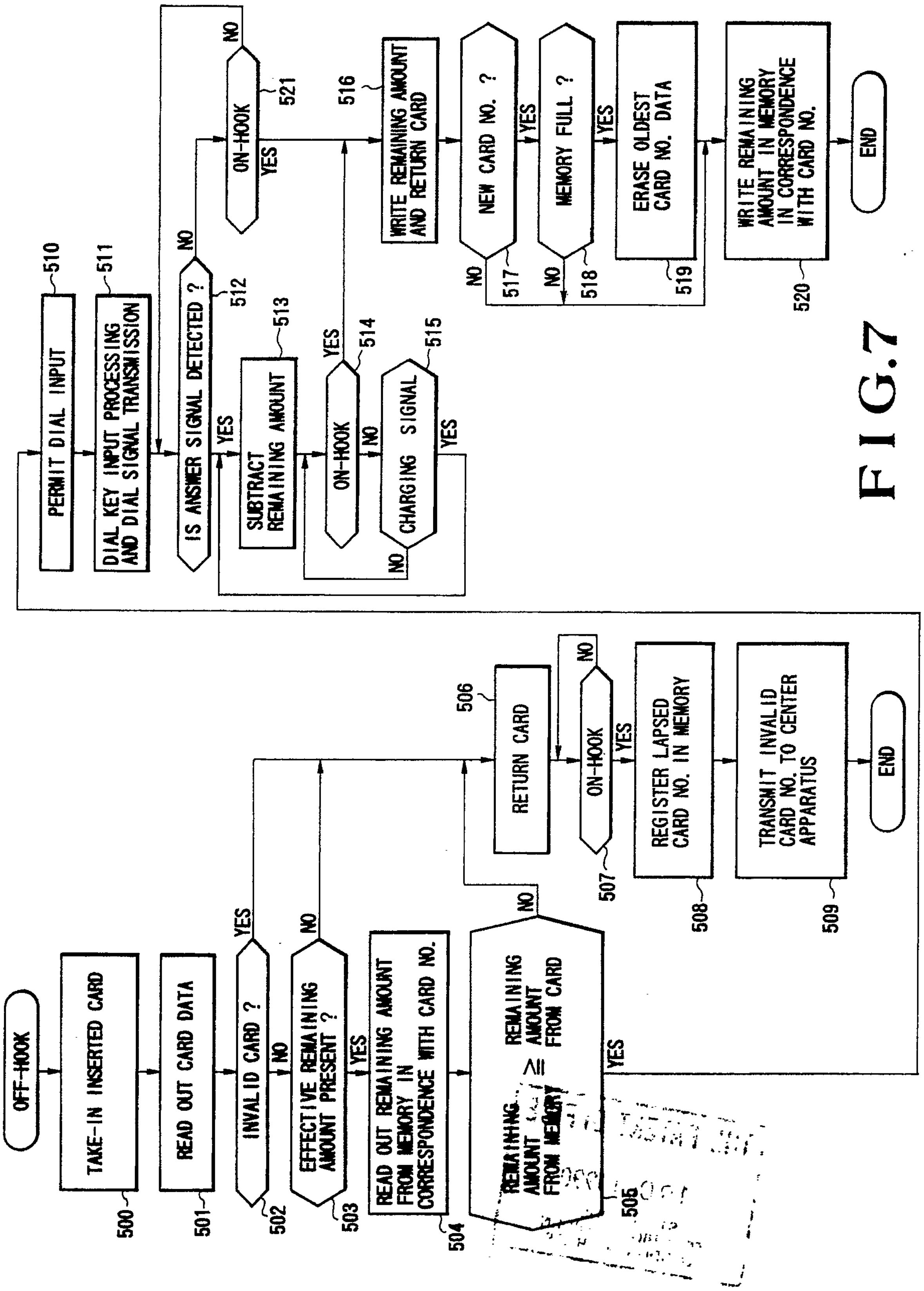
OFF-HOOK
TAKE-IN INSERTED CARD
500
READ OUT CARD DATA
501
INVALID CARD ?
502
YES
NO
EFFECTIVE REMAINING AMOUNT PRESENT ?
503
NO
YES
READ OUT REMAINING AMOUNT FROM MEMORY IN CORRESPONDENCE WITH CARD NO.
504
REMAINING AMOUNT FROM MEMORY ≧ REMAINING AMOUNT FROM CARD
505
NO
YES
RETURN CARD
506
ON-HOOK
507
NO
YES
REGISTER LAPSED CARD NO. IN MEMORY
508
TRANSMIT INVALID CARD NO. TO CENTER APPARATUS
509
END
PERMIT DIAL INPUT
510
DIAL KEY INPUT PROCESSING AND DIAL SIGNAL TRANSMISSION
511
IS ANSWER SIGNAL DETECTED ?
512
NO
YES
SUBTRACT REMAINING AMOUNT
513
ON-HOOK
514
YES
NO
CHARGING SIGNAL
515
YES
NO
ON-HOOK
521
NO
YES
WRITE REMAINING AMOUNT AND RETURN CARD
516
NEW CARD NO. ?
517
YES
NO
MEMORY FULL ?
518
YES
NO
ERASE OLDEST CARD NO. DATA
519
WRITE REMAINING AMOUNT IN MEMORY IN CORRESPONDENCE WITH CARD NO.
520
END

FIG.7